# EUROPEAN PATENT APPLICATION

(11) **EP 3 107 058 A1**
(43) Date of publication of application: **21.12.2016**
(21) Application number: 15305955.5
(22) Date of filing: 19.06.2015
(51) Int. Cl.: G06Q 30/06

(54) **AN IMPROVED METHOD FOR ENABLING A GROUP PURCHASE OF AN OBJECT ON AN ONLINE STORE**

(71) Applicant: Orange, 75015 Paris (FR)
(72) Inventor: LE GOFF, Mikael, 29890 Kerlouan (FR)
(74) Representative: Cabinet Plasseraud

(57) **Abstract**

A method for enabling a group purchase of an object (O) of an online store (OS) by a group (GRP).

The method comprising the steps of:
- sending to a user device (DEV1, DEV2, DEV3) data for rendering a webpage (WP) of a selected object (SO) of the online store (OS),
- receiving from said user device selection data (SD) indicative of a selection of a group purchase option for the selected object (SO), the selection data (SD) comprising an identification datum identifying one participant,
- for each identification datum (IDD), creating a temporary virtual object characterized by a virtual object entry (VOE1, VOE2, VOE3) in the object database (ODB), the virtual object entry (VOE1, VOE2, VOE3) comprising the object identifier of the selected object (SOID), an identification entry (IDP1, IDP2, IDP3) built as a function of the identification data and identifying the corresponding participant (P1, P2, P3), and a link (SOL1, SOL2, SOL3) to a webpage (WP1, WP2, WP3) for viewing the temporary virtual object,
- for each virtual object entry (VOE1, VOE2, VOE3), sending to the corresponding participant (P1, P2, P3) the link (SOL1, SOL2, SOL3) to the webpage (WP1, WP2, WP3) for viewing the corresponding temporary virtual object.

## Description

The invention pertains to the field of online purchases, and in particular to group purchases of items on digital commerce platforms.

In certain situations, a group of persons may desire to commonly purchase one or more items from an online store, for instance with a view of offering the latter to a third party as a gift.

Approaches aimed at providing a solution to this need have been proposed in the past.

One of these approaches consists in having one participant of the group purchase initiate the purchase by selecting an item to be purchased on the online store. The designated participant then sends the resource locator of a payment screen to the co-participants which then have to validate the purchase on their sides before the transaction can be completed.

Such an approach presents drawbacks. In fact, this approach requires that the initiating participant send a link to the other participants and thus requires a rather high number of manipulations of his terminal to be carried out. Moreover, the process lacks flexibility as a whole.

One of the purposes of the invention is therefore to provide an improved approach to group purchases using an online store which does not exhibit these drawbacks.

To that end, the invention relates to a method for enabling a group purchase of an object of an online store, said group comprising a plurality of participants, the online store comprising an object database associated with at least one object of the online store, each object associated with the object database being characterized by an object entry in the object database, the object entry comprising object metadata including an object identifier, a price for the object and a link to a webpage for viewing the object, the method comprising the steps of:
- sending to a user device data for rendering a webpage of a selected object of the online store,
- receiving from said user device selection data indicative of a selection of a group purchase option for the selected object, the selection data comprising at least, for some or all of the participants, an identification datum associated to a participant of the group and identifying said participant,
- for each identification datum identifying a participant, creating a temporary virtual object characterized by a virtual object entry in the object database, the virtual object entry being created as a function of the object entry of the selected object and of the selection data, the virtual object entry comprising the object identifier of the selected object, an identification entry built as a function of the identification datum and identifying the corresponding participant, and a link to a webpage for viewing the temporary virtual object,

- for each virtual object entry, sending to the corresponding participant the link to the webpage for viewing the corresponding temporary virtual object.

This method presents the substantial advantage that it may be easily adapted to existing platforms without requiring deep changes of the handling of the object database of the platform, as the group purchase modalities are implemented through the manipulation of components of the database which are in line with the preexisting objects of the object database.

According to a further aspect of the invention, the temporary virtual objects include a share of the price of the selected object to be paid by the corresponding participant for the group purchase of the selected object.

According to a further aspect of the invention, the selection data comprise share data indicative of the shares of the price of the selected object for some or all of the participants identified by an identification datum, the respective shares of the temporary virtual objects are set as a function of the share data, and the webpages for viewing the corresponding temporary virtual object comprise the corresponding share.

According to a further aspect of the invention, the method further comprises, for at least one participant, receiving input data from a device of said participant, said input data being indicative of the share of the price of the selected object inputted by said participant, and the share of the temporary virtual objects of said at least one participant is set as a function of the input data inputted by the at least one participant.

According to a further aspect of the invention, the virtual object entries comprise a remaining price defined as a function of the difference between the price of the selected object and the sum of the shares of the price of the selected object included in the virtual object entries, and the share contained in the input data of the at least one participant is smaller or equal to the remaining price.

According to a further aspect of the invention, the method further comprises receiving, from a user device of one of the participants, complementary selection data associated with at least one new participant of the group, the complementary selection data containing, for each new participant, a complementary identification datum identifying said new participant of the group, and wherein the method further comprises:
- for each complementary identification datum, creating a temporary virtual object characterized by a virtual object entry in the object database, the virtual object entry being created as a function of the object entry of the selected object and of the complementary selection data, the virtual object entry comprising the object identifier of the selected object, an identification entry built as a function of the complementary identification datum and identifying the corresponding new participant, and a link to a webpage for viewing the temporary virtual object associated to said new participant, and
- sending to each new participant the link to the webpage for viewing the corresponding temporary virtual object.

According to a further aspect of the invention, the method further comprises receiving payment data from a user device of each participant, processing said payment data and removing the corresponding temporary virtual object from the object database after said processing.

According to a further aspect of the invention, the selected object is removed from a stock of the online store once the payment data received from the respective user devices of each participant have been processed.

According to a further aspect of the invention, the selected object comprises one or more items of the online store.

According to a further aspect of the invention, the selected object comprises all or part of a group of items forming a virtual shopping cart of the online store.

According to a further aspect of the invention, all or part of the shares of the selected object correspond to the price of one or more of the items comprised in the selected object.

The invention further relates to a computer program for carrying the process as defined above when executed by a processor.

The invention also relates to a server entity for implementing an online store, the server entity being adapted to enable a group purchase of an object of the online store, said group comprising a plurality of participants, the server entity comprising an object database associated with at least one object of the online store, each object associated with the object database being characterized by an object entry in the object database, the object entry comprising object metadata including an object identifier, a price for the object and a link to a webpage for viewing the object, the server entity comprising:
- a communication module adapted to send to a user device data for rendering a webpage of a selected object of the online store, and to receive from said user device selection data indicative of a selection of a group purchase option for the selected object, the selection data comprising, for some or all of the participants, an identification datum (IDD) associated to a participant and identifying said participant (P1, P2, P3), and
- a processing module configured to create, for each identification datum identifying a participant, a temporary virtual object characterized by a virtual object entry in the object database, the virtual object entry being created as a function of the object entry of the selected object and of the selection data, the virtual object entry comprising the object identifier of the selected object, an identification entry built as a function of the identification datum and identifying the corresponding participant, and a link to a webpage for viewing the temporary virtual object,
the communication module being further configured to send to each participant associated to a virtual object entry the link to the webpage for viewing the corresponding temporary virtual object.

Further features and advantages of the invention will become more apparent by reading the following detailed description of the embodiments, which are given by way of non-limiting examples with reference to the appended drawings, in which:
- Figure 1 is an illustration of a server entity and a system for implementing the method of enabling a group purchase according to the invention;
- Figure 2 is a diagram of the method of enabling a group purchase according to the invention;
- Figure 3 is an exemplary illustration of a webpage made accessible to the participants of the group purchase of Figure 1.

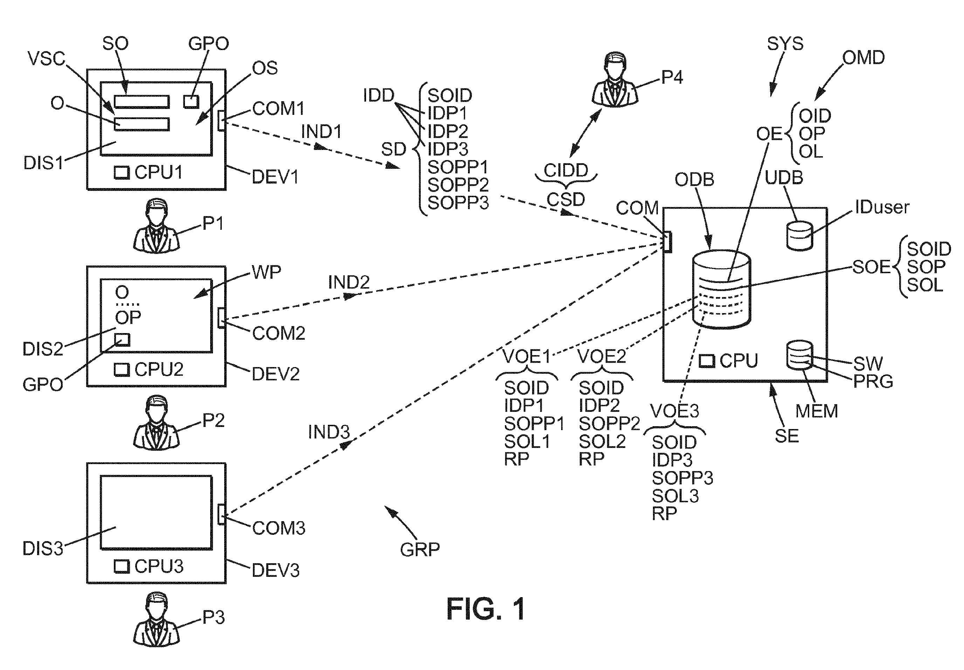

Figure 1 illustrates a system SYS for implementing a method of enabling a group purchase of an object on an online store OS. More precisely, the system SYS is provided to allow the group purchase of a selected object SO chosen by the participants of the group among a plurality of objects O made available by the online store OS.

In the context of the invention, the objects O of the online store are to be understood as being either a single item of the online store, for instance a book, or a group of items of the online store OS. For instance, an object may correspond to a virtual shopping cart VSC created by a user of the online store, for instance participant P1, and regroups several items of the store. The selected object SO may also be one or more items of a virtual shopping cart VSC created by one of the participants, i.e. items which only form part of a virtual shopping cart VSC.

The group purchase is carried out by a group GRP of participants P1, .., Pn. In the example of the Figures, the group GRP contains three participants P1, P2, P3.

The system SYS comprises electronic devices DEV1, DEV2, DEV3 each respectively belonging to one of the participants P1, P2, P3. In this example, the system SYS thus comprises three electronic devices.

Each electronic device DEV1, DEV2, DEV3 is a computer device comprising a display DIS1, DIS2, DIS3 respectively, a communication module COM1, COM2, COM3 and a computing module CPU1, CPU2, CPU3 configured to control the operations of the corresponding display DIS1, DIS2, DIS3 and of the corresponding communication module COM1, COM2, COM3 for the operations of the respective device DEV1, DEV2, DEV3. These devices also comprise additional elements (not shown), such as one or more memory containing programs to be executed by the corresponding computing module for the operations of the associated device, interface elements such as a physical or virtual keyboard, as well as corresponding controllers. However, these elements are not key elements of the present invention and will therefore not be described in detail any further.

The devices DEV1, DEV2, DEV3 may be handheld electronic devices, such as smartphones, laptop computers, smartwatches and the like. However, the devices may also be desktop computers.

The system SYS further comprises a server entity SE associated with the online store OS. The server entity SE may comprise a single server, or a plurality of servers each comprising some of the elements detailed below.

The following description is given in a non-limiting manner for a configuration in which the server entity SE comprises a single server.

The server entity SE comprises a communication module COM to communicate with the devices DEV1, DEV2, DEV3 through their respective communication modules COM1, COM2, COM3. The communications between the communication modules of the server entity and of the devices may be carried out using a wired or wireless network (not shown), which may include the Internet.

The server entity SE further comprises a computing module CPU and a memory MEM. The memory MEM contains software programs SW which are executed by the computing module CPU for the normal operations of the server entity SE, in particular for making the online store OS available to the users. As will detailed below in more details, in particular, the online store OS implements of a group purchase option GPO which can be selected by a user of the online store to trigger the group purchase of an object O, which is referred to as a selected object SO thereafter. The group purchase option GPO is for instance associated with an actionable virtual button (Figure 1) displayed on the display of a device of a user which browses through the online store OS. The results of the activation of the button GPO is detailed below.

The server entity SE further comprises a user database UDB which comprises entries corresponding to the registered users of the online store. The entries of the user database UDB comprise an identifier IDuser for each user.

The server entity SE further comprises an object database ODB associated with the objects O of the online store OS.

Each object of the online store OS is associated to an object entry OE in the object database DB.

Each object entry OE comprises metadata MD which serve to define the corresponding object O.

For each object O, the corresponding metadata MD comprise object identification data OID which identify the object O. The content of the object identification data OID may vary depending on the nature of the object O. For instance, for an object corresponding to a single item of the online store OS, the object identification data OID may consist of a product reference. For an object O which is comprised in a virtual shopping cart VSC, the object identification data OID may comprise one or more product references of the items contained in the cart and an identifier of the virtual shopping cart VSC. For an object O which corresponds to a shopping cart VSC, the object identification data OID may comprise an identifier of the shopping cart VSC and a product reference for every item in the shopping cart VSC.

The metadata MD of an object O also comprise a price OP, which corresponds to the purchase price of the object, and an object link OL, which is a link to a webpage WP (exemplified on the display DIS2 of device DEV2 in Figure 1) for viewing the corresponding object O. For instance, when displayed, the webpage WP contains product information, the price OP of the object, the virtual button of the group purchase option GPO. In case the object O is a virtual shopping cart VSC, the webpage WP may contain a list of the items and, for each item and/or each group of items of the shopping cart VSC, a corresponding virtual button associated with the group purchase option GPO for this item/this group of items.

The elements described above, in particular the server entity SE, are configured to carry out the steps of the method of enabling a group purchase of an object O of the online store according to the invention and described in reference to the Figures.

Initially, in a step S1, one of the participants of the group willing to group purchase an object O of the online store OS, for instance participant P1, browses the online store OS using his device DEV1. To that end, while the participant P1 browses through objects O of the store OS, the computing module CPU of the server entity SE generates data for rendering the webpages WP of the objects O which are viewed by participant P1, and the communication module COM sends these data to the device DEV1. The webpages WP which are thus displayed on the device DEV1 and include the elements described above.

In a step S2, once participant P1 elects an object O for a group purchase, he activates the group purchase option GPO for the object O using the virtual button of the group purchase option GPO on the corresponding webpage WP. This object O then becomes the selected object SO.

The device DEV1 generates data indicative of the selection of the selected object SO using the button of the group purchase option GPO, and sends these data to the server entity SE using the communication module COM1. Upon reception of these data by the server entity SE, the computing module CPU generates data for rendering a webpage for inputting selection data SD regarding the details of the group purchase. These data are then sent to the device DEV1 using the communication module COM. The webpage for inputting selection data SD is then displayed by the device DEV1.

In a step S3, participant P1 inputs the selection data SD using the webpage via his device DEV1. The selection data SD are indicative of the selection of the object O for the group purchase. The selection data SD more precisely contain, for each participant, an identification datum IDD identifying the corresponding participant of the group GRP. Each datum is associated to one participant and serves to identify the corresponding participant.

For instance, the identification datum contains the identifier IDP1, IDP2, IDP3 of the associated participant P1, P2, P3. For instance, the identifiers IDP1, IDP2, IDP3 correspond to the entries of the user database UDB for these participants.

The selection data SD also include share data corresponding to the respective shares SOPP1, SOPP2, SOPP3 of the price SOP of the selected object SO which are to be paid by the corresponding participant. Preferably, the sum of the shares SOPP1, SOPP2, SOPP3 amounts to the price SOP of the selected object SO.

Optionally, the selection data SD also include the object identification data SOID of the selected object SO. However, advantageously, the object identification data SOID of the selected object SO are automatically added to the selection data SD, either by the device DEV1 of participant P1 or by the server entity SE.

The selection data SD are then sent to the server entity SE and are received by the server entity SE.

In a step S4, upon reception of the selection data SD by the server entity SE, the computing module CPU processes the selection data SD. The computing module CPU then creates, for each identification datum IDD identifying a participant P1, P2, P3, a temporary virtual object characterized by a virtual object entry VOE1, VOE2, VOE3 in the object database ODB. Each virtual object entry VOE1, VOE2, VOE3 is associated to one of the participants P1, P2, P3. Moreover, each virtual object entry VOE1, VOE2, VOE3 is created as a function the entry SOE of the selected object SO in the object database ODB and as a function of the selection data SD.

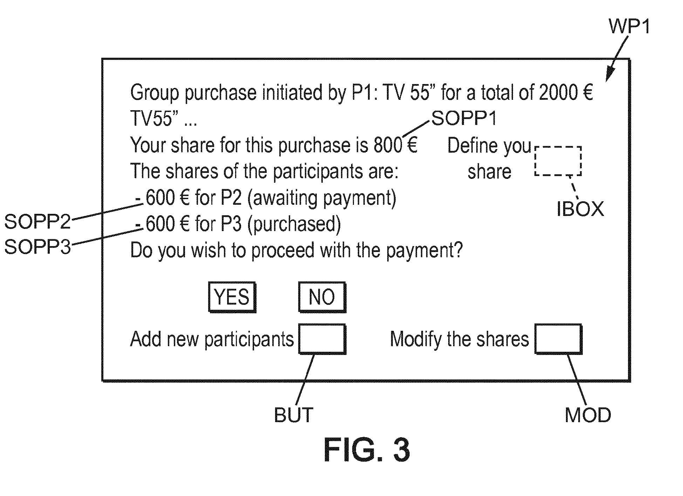

More precisely, each virtual object entry VOE1, VOE2, VOE3 comprises:
- Object identification data SOID which correspond to the object identification data SOID of the selected object SO;
- An identification entry which identifies the associated participant P1, P2, P3. The identification entry may correspond to the identifier IDP1, IDP2, IDP3 of the corresponding participant obtained from the corresponding identification datum IDD contained in the selection data SD;
- the shares SOPP1, SOPP2, SOPP2 of the price SOP of the selected object SO to be paid by the corresponding participant P1which are obtained from the share data of the selection data SD;
- A link SOL1, SOL2, SOL3 to a webpage WP1, WP2, WP3 (Figure 3) for viewing the corresponding temporary virtual object.

For creating the virtual object entries VOE1, VOE2, VOE3, the computing module CPU may proceed by duplicating the entry SOE of the selected object SO and by replacing the parameters of the so-obtained duplicated entry by the parameters above, and/or by adding the parameters described above which are not present in the newly created virtual object entries.

Once the virtual object entries VOE1, VOE2, VOE3 have been added to the object database ODB, the links SOL1, SOL2, SOL3 are communicated to the corresponding participants P1, P2, P3 during a step S5. They are delivered automatically by the server entity SE. This reduces the number of required manipulations the participants have to carry out throughout the overall group purchase process.

For instance, the links are delivered using an email, a message delivery system which is internal to the online store or any suitable communication vector, such as a Short Text Message (SMS). In embodiments wherein the link is delivered to the participants by means other than that of a message delivery system internal to the online store OS, the user database UDB contains, for each user, contact information which is then used by the server entity SE to deliver the link to the corresponding participant P1, P2, P3.

During a step S6, the participants P1, P2, P3 access the webpage corresponding to the link received during step S5.

In reference to Figure 3 which illustrates the webpage WP1 for participant P1, the webpage WP1, WP2, WP3 for viewing the corresponding temporary virtual object VOE1, VOE2, VOE3 includes product information for the selected object SO as well the corresponding share SOPP1, SOPP2, SOPP3. This webpage may further include the respective shares of the other participants P1, P2, P3 of the group GRP as well as information indicative of whether payment of these shares has been carried out by the corresponding participants.

Moreover, the webpage may include an input box for payment data or a virtual button for triggering the input of payment data by the corresponding participant P1, P2, P3.

During a step S7, the participants P1, P2, P3 validate the purchase of their respective share. To that end, for instance after having clicked on the corresponding virtual button, they input the relevant payment data (such as a credit card number and the like) and confirm the purchase of their share.

The payment data are then received by the server entity SE. Upon reception of the payment data of the last share of the selected object to be paid, the sever entity SE proceeds to process and complete the transaction in a known manner, for instance by sending transaction requests to the banking establishments which are either referred to in the payment data of the participants or which are retrieved using the payment data.

At a step S7, once the transaction is complete, the virtual object entries VOE1, VOE2, VOE3 are removed from the object database ODB. In addition, the selected object SO is made available for pickup or delivery. Moreover, the selected object SO is then removed from the stock of the online store OS. In other words, the object database ODB is updated to account for the fact that the selected object SO has been purchased and that the corresponding item(s) is no longer available for purchase via the online store OS.

In the example above, the respective shares of the participants P1, P2, P3 have been depicted as being inputted by the participant who initiates the purchase and as being part of the selection data SD.

However, in an alternative embodiment, the respective shares SOPP1, SOPP2, SOPP3 are inputted by each participant P1, P2, P3 as input data IND1, IND2, IND3 (Figure 1) during step S6. To that end, the webpage WP1, WP2, WP3 corresponding to the link SOL1, SOL2, SOL3 comprises an input box IBOX in which each participant P1, P2, P3 inputs the corresponding share (Figure 3).

The input data IND1, IND2, IND3 are then sent to the server entity SE using the communication module COM1, COM2, COM3 of the corresponding device DEV1, DEV2, DEV3. The computing module CPU of the server entity SE then updates the shares SOPP1, SOPP2, SOPP3 of the virtual object entries VOE1, VOE2, VOE3 as a function of the corresponding input data IND1, IND2, IND3. More particularly, the shares SOPP1, SOPP2, SOPP3 are set to be equal to the shares received through the input data IND1, IND2, IND3.

In the context of this embodiment, the virtual object entries VOE1, VOE2, VOE3 also include a remaining price RP (Figure 1) which is set by the computing module CPU to correspond to the difference between the price SOP of the selected objected SO and the sum of the shares SOPP1, SOPP2, SOPP3 as inputted by the participants. Upon creation of the virtual object entries, the value of the remaining prince RP is for instance initialized at a value equal to zero, and is later updated as a function of the shares inputted by the participants. Moreover, the shares SOPP1, SOPP2, SOPP3 may also be initialized at a value equaling zero upon creation of the virtual object entries.

Advantageously, the remaining price RP is also displayed on the webpage accessed through the corresponding link SOL1, SOL2, SOL3, so that the participants P1, P2, P3 may decide the amount of their share accordingly.

Preferably, the server entity SE prevents the input of a share having a value greater than the remaining price RP. To that end, the server entity SE may return to the device DEV1, DEV2, DEV3 an error message when the corresponding participant P1, P2, P3 attempts to input a share greater than the remaining price RP.

In further embodiments, the two configurations for defining the shares of the participants may be combined. In other words, the selection data SD may contain only part of the shares of the respective participants, the remaining shares being inputted by the remaining participants at a later time.

In the embodiments above, the participants have been described as all initially identified by the initiating participant in the selection data SD. However, alternatively, the participants P1, P2, P3 may not all be identified initially in the selection data SD.

The online store OS may implement a functionality for adding new participants to the group purchase, for instance through the presence, on the webpage WP1, WP2, WP3 associated to the links SOL1, SOL2, SOL3 of the virtual object entries VOE1, VOE2, VOE3, of a virtual button BUT (Figure 3) for triggering the adjunction of new participants.

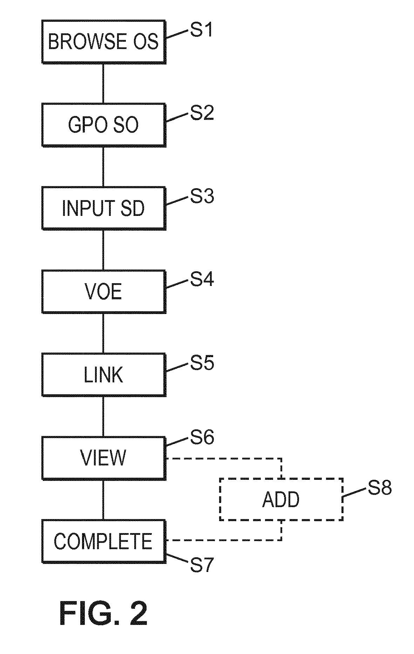

At a step S8 (Figure 2), the pressing of this button BUT triggers the display of a webpage similar to the webpage for inputting the selected data SD disclosed above.

The input of the new participants through this webpage may be in the form of inputting complementary selection data CSD. For instance, the complementary selection data CSD comprise, for each new participant to be added to the group, a complementary identification datum CIDD (Figure 1) which identifies the corresponding new participant (for instance participant P4 on Figure 1). For instance, the complementary identification datum CIDD includes the identifier IDuser of the new participant. Once the complementary selection data CSD are inputted, they are sent to the server entity SE. Upon reception, the computing module CPU creates a new virtual object entry VOE for each complementary identification datum CIDD, as explained above.

The corresponding share of the new participant(s) may be inputted by the participant who adds the new participants as in the first embodiment described above, i.e. the complementary selection data CSD comprise the respective shares of the corresponding new participants, or by the new participants themselves as in the second embodiment, i.e. through the input data inputted by the new participant(s) at a later time.

In further embodiments, the triggering of step S7 may be conditioned by the satisfaction of the criterion according to which the sum of the respective shares of the participants of the group GRP equals the price of the selected object SO. If this criterion is not met, a message is sent to some or all of the participants to adjust their shares.

The shares of all the participants may be adjusted, for instance using a functionality of the online store OS associated to a button MOD (Figure 3) whose action triggers the display by the server entity SE of a webpage for inputting new share values for the different participants, or by the participants themselves as in the second embodiment.

Moreover, advantageously, in case the selected object SO corresponds to a plurality of items, at least one of the shares of the participants corresponds to the price of one or more items of the selected object SO.

Advantageously, the links SOL1, SOL2, SOL3 are only made accessible to the corresponding participant P1, P2, P3. This prevents undue access to the group purchase by a third party.

To that end, for instance, the corresponding webpage is only made accessible when the request sent to the server entity to retrieve the webpage contains the identifier IDP1, IDP2, IDP3 of the associated participant.

Advantageously, the link SOL1, SOL2, SOL3 is removed from the corresponding virtual object entry VOE1, VOE2, VOE3 once the participant has paid his share regardless of whether the other participants have too. This limits the increase of the size of the database ODB induced by the presence of links that are not very likely to be useful anymore.

The invention as described above also relates to a computer program PRG containing instructions for implementing the method described above when executed by a processor. The program PRG may be contained in the memory MEM of the server entity SE.

The method according to the invention has several advantages. In particular, it minimizes the number of manipulations which are required of the different participants so as to complete a group purchase of an object on the online store. This therefore contributes to reducing the power consumption of the devices of the participants, which is particularly interesting when the devices are portables devices having a limited power supply.

The process is also flexible and customizable as the different participants may modify their respective shares, and add further participants to the group as desired. It is also adapted for the purchase of a single item, or a plurality of items, whether this plurality is independent of any other item or is included in a shopping cart formed by a participant. As such, the method does not require that the group purchase be initiated specifically for a given item, but may be carried "on-the-fly" by a person while he or she is browsing through the online store and has already elected to purchase other items in a non-group purchase.

## Claims

1. A method for enabling a group purchase of an object (O) of an online store (OS) by a group (GRP), said group (GRP) comprising a plurality of participants (P1, P2, P3), the online store (OS) comprising an object database (ODB) associated with at least one object (O) of the online store, each object (O) associated with the object database (ODB) being **characterized by** an object entry (OE) in the object database (ODB), the object entry (OE) comprising object metadata (OMD) including an object identifier (OID), a price (OP) for the object (O) and a link (OL) to a webpage (WP) for viewing the object, the method comprising the steps of:
- sending to a user device (DEV1, DEV2, DEV3) data for rendering a webpage (WP) of a selected object (SO) of the online store (OS),
- receiving from said user device selection data (SD) indicative of a selection of a group purchase option for the selected object (SO), the selection data (SD) comprising at least, for some or all of the participants, an identification datum (IDD) associated to a participant of the group and identifying said participant (P1, P2, P3) of the group,
- for each identification datum (IDD) identifying a participant, creating a temporary virtual object **characterized by** a virtual object entry (VOE1, VOE2, VOE3) in the object database (ODB), the virtual object entry (VOE1, VOE2, VOE3) being created as a function of the object entry (SOE) of the selected object (SO) and of the selection data (SD), the virtual object entry (VOE1, VOE2, VOE3) comprising the object identifier of the selected object (SOID), an identification entry (IDP1, IDP2, IDP3) built as a function of the identification datum and identifying the corresponding participant (P1, P2, P3), and a link (SOL1, SOL2, SOL3) to a webpage (WP1, WP2, WP3) for viewing the temporary virtual object,
- for each virtual object entry (VOE1, VOE2, VOE3), sending to the corresponding participant (P1, P2, P3) the link (SOL1, SOL2, SOL3) to the webpage (WP1, WP2, WP3) for viewing the corresponding temporary virtual object.

2. The method according to claim 1, wherein the virtual object entries (VOE1, VOE2, VOE3) include a share (SOPP1, SOPP2, SOPP3) of the price (SOP) of the selected object to be paid by the corresponding participant (P1, P2, P3) for the group purchase of the selected object.

3. The method according to claim 2, wherein the selection data (SD) comprise share data indicative of the shares (SOPP1, SOPP2, SOPP3) of the price of the selected object for some or all of the participants identified by an identification datum, wherein the respective shares of the temporary virtual objects are set as a function of the share data (SOPP1, SOPP2, SOPP3), and wherein the webpages (WP1, WP2, WP3) for viewing the corresponding temporary virtual object comprise the corresponding share.

4. The method according to claim 2 or 3, wherein the method further comprises, for at least one participant (P1, P2, P3), receiving input data (IND1, IND2, IND3) from a device (DEV1, DEV2, DEV3) of said participant, said input data being indicative of the share of the price of the selected object to be paid by said participant, and wherein the share (SOPP1, SOPP2, SOPP3) of the temporary virtual objects of said at least one participant is set as a function of the input data inputted by the at least one participant (P1, P2, P3).

5. The method according to claim 4, wherein the virtual object entries (VOE1, VOE2, VOE3) comprise a remaining price (RP) defined as a function of the difference between the price (SOP) of the selected object (SO) and the sum of the shares (SOPP1, SOPP2, SOPP3) of the price of the selected object included in the virtual object entries (VOE1, VOE2, VOE3), and wherein the share contained in the input data of the at least one participant is smaller or equal to the remaining price.

6. The method according to any one of the preceding claims, wherein the method further comprises receiving, from a user device of one of the participants, complementary selection data (CSD) associated with at least one new participant of the group, the complementary selection data containing, for each new participant, a complementary identification datum (CIDD) identifying said new participant of the group, and wherein the method further comprises:
- for each complementary identification datum (CIDD), creating a temporary virtual object (VOE) **characterized by** a virtual object entry in the object database, the virtual object entry being created as a function of the object entry (SOE) of the selected object (SO) and of the complementary selection data (CSD), the virtual object entry (CSD) comprising the object identifier of the selected object (SOID), an identification entry built as a function of the complementary identification datum (CIDD) and identifying the corresponding new participant, and a link to a webpage for viewing the temporary virtual object associated to said new participant, and
- sending to each new participant the link to the webpage for viewing the corresponding temporary virtual object.

7. The method according to any one of the preceding claims, wherein the method further comprises receiving payment data from a user device of each participant, processing said payment data and removing the corresponding temporary virtual object from the object database after said processing.

8. The method according to claim 7, wherein the selected object is removed from a stock of the online store once the payment data received from the respective user devices of each participant have been processed.

9. The method according to any of the preceding claims, wherein the selected object (SO) comprises one or more items of the online store.

10. The method according to any one of the preceding claims, wherein the selected object (SO) comprises all or part of a group of items forming a virtual shopping cart (VSC) of the online store (OS).

11. The method according to claims 2 and 9 or 10, wherein all or part of the shares corresponds to the price of one or more of the items comprised in the selected object (SO).

12. Computer program comprising instructions for carrying out the method according to any one of the preceding claims when executed by a processor.

13. Server entity for implementing an online store (OS), the server entity (SE) being adapted to enable a group purchase of an object (O) of the online store (OS) by a group (GRP), said group (GRP) comprising a plurality of participants (P1, P2, P3), the server entity (SE) comprising an object database (ODB) associated with at least one object of the online store, each object associated with the object database being **characterized by** an object entry (OE) in the object database (ODB), the object entry comprising object metadata (OMD) including an object identifier (OID), a price (OP) for the object (O) and a link (OL) to a webpage for viewing the object, the server entity (SE) comprising:
- a communication module (COM) adapted to send to a user device (DEV1, DEV2, DEV3) data for rendering a webpage of a selected object (SO) of the online store, and to receive from said user device selection data (SD) indicative of a selection of a group purchase (GPO) option for the selected object (SO), the selection data (SD) comprising, for some or all of the participants, an identification datum (IDD) associated to a participant of the group and identifying said participant (P1, P2, P3), and
- a processing module (CPU) configured to create, for each identification datum identifying a participant, a temporary virtual object **characterized by** a virtual object entry (VOE1, VOE2, VOE3) in the object database (ODB), the virtual object entry being created as a function of the object entry of the selected object in the database and of the selection data (SD), the virtual object entry (VOE1, VOE2, VOE3) comprising the object identifier (SOID) of the selected object (SOID), an identification entry (IDP1, IDP2, IDP3) built as a function of the identification datum (IDD) and identifying the corresponding participant (P1, P2, P3), and a link (SOL1, SOL2, SOL3) to a webpage (WP1, WP2, WP3) for viewing the temporary virtual object,
the communication module being further configured to send to each participant associated to a virtual object entry (VOE1, VOE2, VOE3) the link (SOL1, SOL2, SOL3) to the webpage (WP1, WP2, WP3)for viewing the corresponding temporary virtual object.
